# EUROPÄISCHE PATENTSCHRIFT

(11) **EP 2 673 488 B1**
(45) Veröffentlichungstag und Bekanntmachung des Hinweises auf die Patenterteilung: **11.09.2019**
(21) Anmeldenummer: 12702293.7
(22) Anmeldetag: 08.02.2012
(51) Int. Cl.: F02C 6/12, F04D 29/42, F04D 29/58, F02B 39/00, F01D 25/14

(54) **ABGASTURBOLADER MIT GEKÜHLTEM TURBINENGEHÄUSE UND GEKÜHLTEM LAGERGEHÄUSE UND GEMEINSAMER KÜHLMITTELZUFUHR**
TURBOCHARGER WITH COOLED TURBINE HOUSING, COOLED BEARING HOUSING, AND A COMMON COOLANT SUPPLY
TURBOCOMPRESSEUR À GAZ D'ÉCHAPPEMENT MUNI D'UN CARTER DE TURBINE REFROIDI, D'UN CARTER DE PALIER REFROIDI ET D'UNE ALIMENTATION EN LIQUIDE DE REFROIDISSEMENT COMMUNE

(30) Priorität: 10.02.2011 DE 102011003901
(43) Veröffentlichungstag der Anmeldung: 18.12.2013
(73) Patentinhaber: Continental Automotive GmbH, 30165 Hannover (DE)
(72) Erfinder: BOGNER, Mathias, 93083 Obertrauling (DE); HILLER, Marc, 67294 Morschheim (DE); KÖMPEL, Ralph-Maurice, 68159 Mannheim (DE)
(86) Internationale Anmeldenummer: PCT/EP2012/052115
(87) Internationale Veröffentlichungsnummer: WO 2012/107481

(56) Entgegenhaltungen:
- WO-A2-2009/019153
- WO-A2-2010/009945
- DE-A1-102008 011 258
- US-A1- 2004 083 730

## Beschreibung

Die Erfindung betrifft einen Abgasturbolader, der ein gekühltes Turbinengehäuse aufweist.

Abgasturbolader dienen dazu, den Wirkungsgrad eines Verbrennungsmotors zu verbessern und damit dessen Leistung zu steigern. Der Abgasturbolader weist hierzu eine Turbine mit einem Turbinenrad und einen Verdichter mit einem Verdichterrad auf, wobei die beiden Laufräder auf einer gemeinsamen Welle angeordnet sind. Das Turbinenrad wird hierbei über einen Abgasmassenstrom einer angeschlossenen Brennkraftmaschine angetrieben und treibt wiederum das Verdichterrad an. Der Verdichter verdichtet angesaugte Frischluft und führt diese der Brennkraftmaschine zu. Die gemeinsame Welle ist in einem Lagergehäuse des Turboladers gelagert. Des Weiteren ist das Turbinenrad der Turbine in einem Turbinengehäuse angeordnet und das Verdichterrad des Verdichters in einem Verdichtergehäuse.

Ein solcher Abgasturbolader hat im Betrieb an der Brennkraftmaschine bzw. einem angeschlossenen Motor verschiedenste Anforderungen zu erfüllen. Eine dieser Anforderungen besteht darin, die hohen Temperaturen aufzunehmen, die beispielsweise aufgrund des heißen Abgasmassenstroms in dem Turboladergehäuse entstehen können.

Die übliche Konstruktion eines Abgasturboladers sieht dabei einzelne Gehäuse vor, die jeweils aus einem an die dort herrschende Temperatur angepassten Werkstoff bestehen. Dabei ist das Verdichtergehäuse üblicherweise aus Aluminium, während das Lagergehäuse aus Grauguss ist. Das Turbinengehäuse besteht im Allgemeinen aufgrund der hohen Temperaturen, die in diesem Bereich herrschen, aus hochtemperaturbeständigen Nickellegierungen. Aufgrund der angepassten, unterschiedlichen Werkstoffe für die einzelnen Gehäuse sind diese Gehäuse als separate Teile ausgebildet, die miteinander verbunden sind und dabei außerdem gegeneinander abgedichtet sein müssen.

Sowohl das Lagergehäuse als auch das Turbinengehäuse kann wassergekühlt ausgeführt sein, wobei die Kühlkreisläufe von Lagergehäuse und Turbinengehäuse unabhängig voneinander realisiert sind. Folglich ist es notwendig, das Lagergehäuse und das Turbinengehäuse über separate Leitungen mit Kühlwasser zu versorgen. Dabei ist jeweils ein Wasserzulauf und jeweils ein Wasserablauf notwendig.

Aus der DE 10 2008 011 258 A1 ist ein Turbolader bekannt, bei dem das Gehäuse, welches das Turbinengehäuse und das Lagergehäuse umfasst, insgesamt mit einem außen umlaufenden Kühlmantel versehen ist, welcher ein oder mehrere Schalenelemente aufweist. Das Gehäuse insgesamt weist einen Kühlmitteleinlass und einen Kühlmittelauslass auf. Das Lagergehäuse hat einen Kühlmitteleingang, einen im Bereich der Lageranordnung vorgesehenen Kühlmantel und auch einen Kühlmittelausgang. Der Kühlmitteleingang des Lagergehäuses und der Kühlmittelausgang des Lagergehäuses sind mit dem das Turbinengehäuse umgebenden Kühlmantel verbunden. Innerhalb des Turbinengehäuses ist kein Kühlmantel vorgesehen.

Aus der WO 2009/019153 A2 ist ein Turbolader, insbesondere für ein Kraftfahrzeug, mit einem Turbinengehäuse und einem Lagergehäuse bekannt, wobei das Turbinengehäuse und das Lagergehäuse mit einer gemeinsamen Kühlungseinrichtung versehen sind.

Die Aufgabe der Erfindung besteht darin, einen Abgasturbolader mit verbesserter Kühlung anzugeben.

Diese Aufgabe wird durch einen Abgasturbolader mit den im Anspruch 1 angegebenen Merkmalen gelöst. Vorteilhafte Ausgestaltungen und Weiterbildungen der Erfindung sind in den abhängigen Ansprüchen angegeben.

Gemäß der vorliegenden Erfindung weist ein Abgasturbolader ein Turbinengehäuse und ein mit dem Turbinengehäuse verbundenes Lagergehäuse auf, wobei das Turbinengehäuse einen Kühlmitteleingang, einen im Inneren des Turbinengehäuses vorgesehenen Kühlmantel und einen Kühlmittelausgang aufweist, das Lagergehäuse einen Kühlmitteleingang, einen im Inneren des Lagergehäuses vorgesehenen Kühlmantel und einen Kühlmittelausgang aufweist, innerhalb des Turbinengehäuses zwischen dem Kühlmitteleingang und dem Kühlmantel ein Kühlmitteleingangskanal vorgesehen ist, vom Kühlmitteleingangskanal ein Kühlmittelabzweigkanal abzweigt, der mit dem Kühlmitteleingang des Lagergehäuses verbunden ist, innerhalb des Turbinengehäuses zwischen dem Kühlmantel und dem Kühlmittelausgang ein Kühlmittelausgangskanal vorgesehen ist, ein innerhalb des Turbinengehäuses vorgesehener Kühlmittelrückführungskanal mit dem Kühlmittelausgang des Lagergehäuses verbunden ist und der Kühlmittelrückführungskanal in den Kühlmittelausgangskanal mündet, welcher im Turbinengehäuse zwischen dem Kühlmantel und dem Kühlmittelausgang vorgesehen ist.

Die Vorteile eines derartigen Abgasturboladers bestehen darin, dass er weniger Bauteile und weniger Bauraum benötigt als bekannte Abgasturbolader und deshalb kompakter aufgebaut werden kann als bekannte Abgasturbolader. Insbesondere bedarf es nur einer Kühlmittelversorgungsleitung zwischen der Kühlmittelquelle, bei der es sich beispielsweise um den Kühlkreislauf der Brennkraftmaschine handelt, und dem Abgasturbolader und auch nur einer Kühlmittelrückführungsleitung zum Kühlkreislauf der Brennkraftmaschine.

Weitere vorteilhafte Eigenschaften der Erfindung ergeben sich aus deren nachfolgender Erläuterung anhand der Figuren. Es zeigt
- Figur 1: eine Skizze zur grundsätzlichen Erläuterung des Kühlsystems eines Abgasturboladers gemäß der Erfindung und
- Figur 2: detailliertere Darstellungen von Teilen eines Abgasturboladers gemäß der Erfindung.

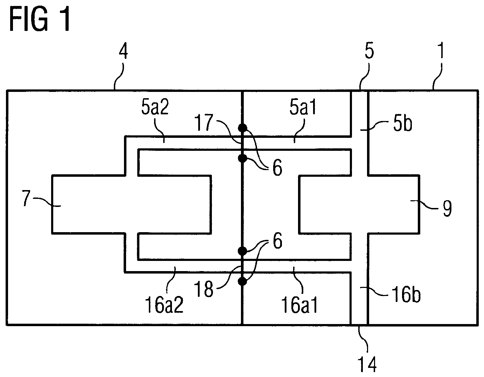

Die Figur 1 zeigt eine Skizze zur grundsätzlichen Erläuterung des Kühlsystems eines Abgasturboladers gemäß der Erfindung.

Ein Abgasturbolader gemäß der Erfindung weist ein Turbinengehäuse 1 und ein mit dem Turbinengehäuse verbundenes Lagergehäuse 4 auf. Das Turbinengehäuse 1 hat einen Kühlmitteleingang 5, durch welchen dem Turbinengehäuse im Betrieb des Abgasturboladers Kühlwasser zugeführt wird. Dieses Kühlwasser wird beispielsweise vom Kühlkreislauf der Brennkraftmaschine bereitgestellt.

Des Weiteren weist das Turbinengehäuse 1 einen Kühlmittelausgang 14 auf, durch welchen im Betrieb des Abgasturboladers Kühlwasser ausgegeben wird. Dieses vom Turbinengehäuse ausgegebene Kühlwasser wird beispielsweise an den Kühlkreislauf der Brennkraftmaschine zurückgeleitet.

Ferner ist im Inneren des Turbinengehäuses 1 ein Kühlmantel 9 vorgesehen, innerhalb dessen im Betrieb des Abgasturboladers Kühlmittel transportiert wird, um Bestandteile des Turbinengehäuses, insbesondere den Wastegateklappensitz und die Turbinenspirale, ausreichend zu kühlen.

Der Kühlmitteleingang 5 ist mit dem Kühlmantel 9 über einen Kühlmitteleingangskanal 5b verbunden. Der Kühlmittelausgang 14 ist mit dem Kühlmantel 9 über einen Kühlmittelausgangskanal 16b verbunden.

Von dem zwischen dem Kühlmitteleingang 5 und dem Kühlmantel 9 vorgesehenen Kühlmitteleingangskanal 5b zweigt ein turbinengehäuseseitiger Kühlmittelabzweigkanal 5a1 ab. Dieser Kühlmittelabzweigkanal reicht bis zu einem Ausgang des Turbinengehäuses und ist dort mit einem Kühlmitteleingang 17 des Lagergehäuses 4 direkt verbunden. Im Bereich des Kühlmitteleingangs 17 des Lagergehäuses 4 ist zwischen dem Lagergehäuse und dem Turbinengehäuse eine Dichtung 6 vorgesehen, bei welcher es sich vorzugsweise um einen O-Ring oder um eine Sickendichtung handelt.

Des weiteren ist innerhalb des Turbinengehäuses 1 zwischen dem Kühlmantel 9 und dem Kühlmittelausgang 14 ein Kühlmittelausgangskanal 16b vorgesehen.

In diesen Kühlmittelausgangskanal 16b mündet ein turbinengehäuseseitiger Kühlmittelrückführungskanal 16a1, dessen anderer Endabschnitt bis zum Außenrand des Turbinengehäuses reicht und dort mit dem Kühlmittelausgang 18 des Lagergehäuses direkt verbunden ist. Im Bereich des Kühlmittelausgangs 18 des Lagergehäuses 4 ist zwischen dem Lagergehäuse und dem Turbinengehäuse eine weitere Dichtung 6 vorgesehen, bei der es sich vorzugsweise ebenfalls um einen O-Ring oder um eine Sickendichtung handelt.

Der Kühlmitteleingang 17 des Lagergehäuses 4 ist innerhalb des Lagergehäuses über einen lagergehäuseseitigen Kühlmitteleingangskanal 5a2 mit dem Kühlmantel 7 des Lagergehäuses verbunden. Durch diesen Kühlmantel 7 wird im Betrieb des Abgasturboladers Kühlmittel transportiert, um Bestandteile des Lagergehäuses, insbesondere die Lagerelemente und die Dichtelemente, ausreichend zu kühlen.

Der Kühlmantel 7 des Lagergehäuses 4 ist über einen lagergehäuseseitigen Kühlmittelausgangskanal 16a2 mit dem Kühlmittelausgang 18 des Lagergehäuses verbunden.

Im Betrieb des Abgasturboladers wird folglich über den Kühlmitteleingang 5 des Turbinengehäuses 1 Kühlmittel empfangen. Dieses Kühlmittel wird innerhalb des Turbinengehäuses aufgeteilt in einen ersten Kühlmittelstrom, der zur Kühlung von Bauteilen des Turbinengehäuses verwendet wird, und einen zweiten Kühlmittelstrom. Dieser zweite Kühlmittelstrom wird über den turbinengehäuseseitigen Kühlmittelabzweigkanal 5a1 dem Kühlmitteleingang 17 des Lagergehäuses 4 zugeführt, tritt dort in den lagergehäuseseitigen Kühlmitteleingangskanal 5a2 ein, wird durch diesen zum Kühlmantel 7 des Lagergehäuses geführt und dort zur Kühlung von Bauteilen des Lagergehäuses verwendet. Der den Kühlmantel 7 des Lagergehäuses verlassende zweite Kühlmittelstrom wird über den lagergehäuseseitigen Kühlmittelausgangskanal 16a2 an den Kühlmittelausgang 18 des Lagergehäuses weitergeleitet und tritt dort in den turbinengehäuseseitigen Kühlmittelrückführungskanal 16a1 ein. Schließlich werden innerhalb des Turbinengehäuses im Bereich des Kühlmittelausgangskanals 16b der den Kühlmantel 9 des Turbinengehäuses verlassende erste Kühlmittelstrom und der durch den Kühlmittelrückführungskanal 16a1 vom Lagergehäuse rückgeführte zweite Kühlmittelstrom wieder zusammengeführt. Der zusammengeführte Kühlmittelstrom wird durch den Kühlmittelausgang 14 des Turbinengehäuses ausgegeben und an den Kühlkreislauf der Brennkraftmaschine zurückgeführt.

Die Kühlmittelzu- und -abfuhr des Lagergehäuses erfolgt bei dem vorstehend beschriebenen Ausführungsbeispiel nach alledem nicht über eigene Zuleitungen des Lagergehäuses, sondern über das Turbinengehäuse. Dieses ist mit dem Lagergehäuse verbunden, beispielsweise mit dem Lagergehäuse verschraubt. Innerhalb des Turbinengehäuses wird Kühlmittel für das Lagergehäuse abgezweigt. Innerhalb des Turbinengehäuses wird das vom Lagergehäuse rückgeführte Kühlmittel wieder mit dem vom Kühlmantel des Turbinengehäuses ausgegebenen Kühlmittel zusammengeführt.

Vorzugsweise erfolgt die genannte Abzweigung des Kühlmittels direkt vor dem Kühlmantel 9 des Turbinengehäuses und das genannte Zusammenführen des Kühlmittels unmittelbar hinter dem Kühlmantel.

Ein Vorteil der vorstehend beschriebenen Ausbildung des Kühlsystems eines Abgasturboladers besteht darin, dass die Querschnitte der Zu- und Rückläufe des Kühlmittels als definierte Drosselquerschnitte ausgelegt werden können. Diese Auslegung erfolgt in vorteilhafter Weise derart, dass ein Auftreten von Staueffekten des Kühlmittels im Turbinengehäuse vermieden wird und dass die Druckverhältnisse des Kühlmittels derart eingestellt werden, dass ein definierter Kühlmittelvolumenstrom abgezweigt wird.

Im Falle einer Positionierung des Kühlmittelabzweigs innerhalb des Bereiches des Kühlmantels 9 des Turbinengehäuses, insbesondere im Bereich des Kühlmantels des Turbinenrades, würde durch die sich ändernden Strömungsverhältnisse eine undefinierte Kühlmittelabzweigströmung zum Lagergehäuse entstehen.

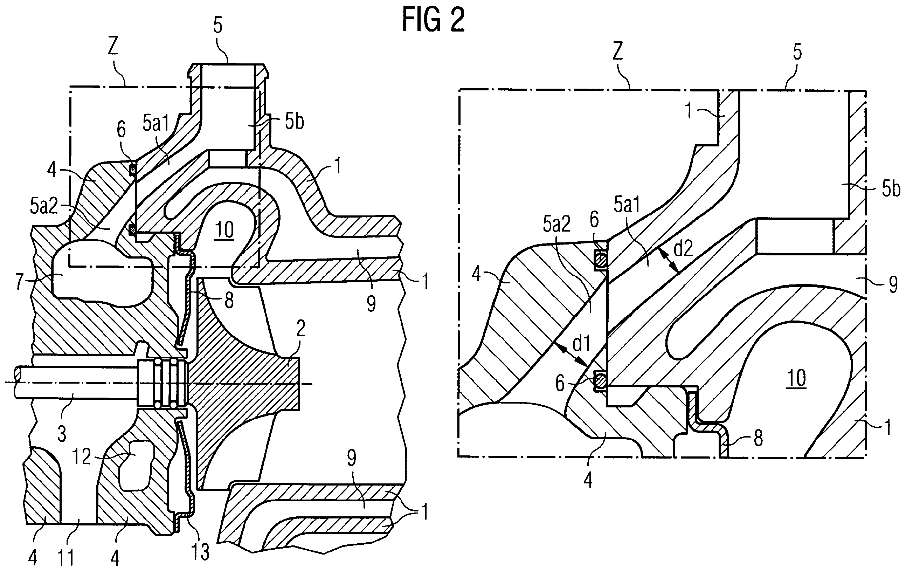

Die Figur 2 zeigt detailliertere Darstellungen von Teilen eines Abgasturboladers gemäß der Erfindung. Dabei sind im linken Teil der Figur 2 ein Teil des Turbinengehäuses 1 und ein Teil des mit dem Turbinengehäuse direkt verbundenen Lagergehäuses 4 und im rechten Teil von Figur 2 das Detail Z aus dem linken Teil in vergrößerter Darstellung gezeigt.

Aus der Figur 2 ist ersichtlich, dass das durch den Kühlmitteleingang 5 des Turbinengehäuses 1 eintretende Kühlmittel im Bereich eines Kühlmitteleingangskanals 5b aufgeteilt wird in einen ersten Kühlmittelstrom und einen zweiten Kühlmittelstrom. Der erste Kühlmittelstrom wird dem Kühlmantel 9 des Turbinengehäuses zugeführt. Der zweite Kühlmittelstrom wird durch einen turbinengehäuseseitigen Kühlmittelabzweigkanal 5a1 und einen lagergehäuseseitigen Kühlmitteleingangskanal 5a2 dem Kühlmantel 7 des Lagergehäuses 4 zugeführt.

Im Übergangsbereich des Kühlmittels vom Turbinengehäuse 1 zum Lagergehäuse 4, welches mit dem Turbinengehäuse beispielsweise verschraubt ist, ist eine Dichtung 6 vorgesehen, die diesen Übergangsbereich abdichtet. Des Weiteren ist aus der Figur 2 ersichtlich, dass der Durchmesser d1 des lagergehäuseseitigen Kühlmitteleingangskanals 5a2 größer ist als der Durchmesser d2 des turbinengehäuseseitigen Kühlmittelabzweigkanals 5a1. Der Abzweigkanal insgesamt wird also in Strömungsrichtung des Kühlmittels breiter. Dies hat den Vorteil, dass ein durch eventuelle Bauteiltoleranzen verursachter Versatz ausgeglichen wird.

Des Weiteren sind aus der Figur 2 das im Turbinengehäuse vorgesehene Turbinenrad 2, die gemeinsame Welle 3, ein Hitzeschild 8, ein Hohlraum 10 der Turbinenspirale, ein im Lagergehäuse vorgesehener Ölrücklauf 11 und ein weiteres Hitzeschild 13 ersichtlich.

Auch bei dem in der Figur 2 nicht gezeichneten Kühlmittelrückführungskanal kann sich der Kanalquerschnitt in Strömungsrichtung des Kühlmittels vergrößern, so dass der turbinengehäuseseitige Kühlmittelrückführungskanal einen größeren Durchmesser aufweist als der lagergehäuseseitige Kühlmittelausgangskanal.

## Patentansprüche

1. Abgasturbolader, der ein Turbinengehäuse (1) und ein mit dem Turbinengehäuse verbundenes Lagergehäuse (4) aufweist, wobei
- das Turbinengehäuse einen Kühlmitteleingang (5), einen im Inneren des Turbinengehäuses vorgesehenen Kühlmantel (9) und einen Kühlmittelausgang (14) aufweist,
- das Lagergehäuse einen Kühlmitteleingang (17), einen im Inneren des Lagergehäuses vorgesehenen Kühlmantel (7) und einen Kühlmittelausgang (18) aufweist,
**dadurch gekennzeichnet, dass**
- innerhalb des Turbinengehäuses (1) zwischen dem Kühlmitteleingang (5) und dem Kühlmantel (9) ein Kühlmitteleingangskanal (5b) vorgesehen ist,
- vom Kühlmitteleingangskanal (5b) ein Kühlmittelabzweigkanal (5a1) abzweigt, der mit dem Kühlmitteleingang (17) des Lagergehäuses verbunden ist,
- innerhalb des Turbinengehäuses (1) zwischen dem Kühlmantel (9) und dem Kühlmittelausgang (14) ein Kühlmittelausgangskanal (16b) vorgesehen ist,
- ein innerhalb des Turbinengehäuses vorgesehener Kühlmittelrückführungskanal (16a1) mit dem Kühlmittelausgang (18) des Lagergehäuses verbunden ist und
- der Kühlmittelrückführungskanal (16a1) in den Kühlmittelausgangskanal (16b) mündet, welcher im Turbinengehäuse (1) zwischen dem Kühlmantel (9) und dem Kühlmittelausgang (14) vorgesehen ist.

2. Abgasturbolader nach Anspruch 1, **dadurch gekennzeichnet, dass** der Kühlmitteleingang (17) des Lagergehäuses (4) über einen lagergehäuseseitigen Kühlmitteleingangskanal (5a2) mit dem Kühlmantel (7) des Lagergehäuses verbunden ist.

3. Abgasturbolader nach Anspruch 1 oder 2, **dadurch gekennzeichnet, dass** der Kühlmittelausgang (18) des Lagergehäuses (4) über einen lagergehäuseseitigen Kühlmittelausgangskanal (16a2) mit dem Kühlmantel (7) des Lagergehäuses (4) verbunden ist.

4. Abgasturbolader nach einem der vorhergehenden Ansprüche, **dadurch gekennzeichnet, dass** im Bereich des Kühlmitteleingangs (17) des Lagergehäuses (4) zwischen dem Lagergehäuse und dem Turbinengehäuse eine Dichtung (6) vorgesehen ist.

5. Abgasturbolader nach einem der vorhergehenden Ansprüche, **dadurch gekennzeichnet, dass** im Bereich des Kühlmittelausgangs (18) des Lagergehäuses (4) zwischen dem Lagergehäuse und dem Turbinengehäuse eine weitere Dichtung (6) vorgesehen ist.

6. Abgasturbolader nach Anspruch 4 oder 5, **dadurch gekennzeichnet, dass** die Dichtung ein Dichtring oder eine Sickendichtung ist.

7. Abgasturbolader nach einem der Ansprüche 2 - 6, **dadurch gekennzeichnet, dass** der Durchmesser (d1) des lagergehäuseseitigen Kühlmitteleingangskanals (5a2) größer ist als der Durchmesser (d2) des turbinengehäuseseitigen Kühlmittelabzweigkanals (5a1).

## Claims

1. Exhaust-gas turbocharger which has a turbine housing (1) and a bearing housing (4) connected to the turbine housing, wherein
- the turbine housing has a coolant inlet (5), a cooling jacket (9) provided in the interior of the turbine housing, and a coolant outlet (14),
- the bearing housing has a coolant inlet (17), a cooling jacket (7) provided in the interior of the bearing housing, and a coolant outlet (18),
**characterized in that**
- a coolant inlet duct (5b) is provided within the turbine housing (1) between the coolant inlet (5) and the cooling jacket (9),
- a coolant branch duct (5a1) branches off from the coolant inlet duct (5b), said coolant branch duct being connected to the coolant inlet (17) of the bearing housing,
- a coolant outlet duct (16b) is provided within the turbine housing (1) between the cooling jacket (9) and the coolant outlet (14),
- a coolant return duct (16a1) provided within the turbine housing is connected to the coolant outlet (18) of the bearing housing, and
- the coolant return duct (16a1) issues into the coolant outlet duct (16b) which is provided in the turbine housing (1) between the cooling jacket (9) and the coolant outlet (14).

2. Exhaust-gas turbocharger according to Claim 1, **characterized in that** the coolant inlet (17) of the bearing housing (4) is connected via a bearing-housing-side coolant inlet duct (5a2) to the cooling jacket (7) of the bearing housing.

3. Exhaust-gas turbocharger according to Claim 1 or 2, **characterized in that** the coolant outlet (18) of the bearing housing (4) is connected via a bearing-housing-side coolant outlet duct (16a2) to the cooling jacket (7) of the bearing housing (4).

4. Exhaust-gas turbocharger according to one of the preceding claims, **characterized in that** a seal (6) is provided between the bearing housing and the turbine housing in the region of the coolant inlet (17) of the bearing housing (4).

5. Exhaust-gas turbocharger according to one of the preceding claims, **characterized in that** a further seal (6) is provided between the bearing housing and the turbine housing in the region of the coolant outlet (18) of the bearing housing (4).

6. Exhaust-gas turbocharger according to Claim 4 or 5, **characterized in that** the seal is a sealing ring or a bead-type seal.

7. Exhaust-gas turbocharger according to one of Claims 2 to 6, **characterized in that** the diameter (d1) of the bearing-housing-side coolant inlet duct (5a2) is greater than the diameter (d2) of the turbine-housing-side coolant branch duct (5a1) .

## Revendications

1. Turbocompresseur à gaz d'échappement, qui comprend un carter de turbine (1) et un carter de palier (4) relié au carter de turbine, dans lequel
- le carter de turbine comprend une entrée de réfrigérant (5), une enveloppe de refroidissement (9) disposée à l'intérieur du carter de turbine et une sortie de réfrigérant (14),
- le carter de palier comprend une entrée de réfrigérant (17), une enveloppe de refroidissement (7) disposée à l'intérieur du carter de palier et une sortie de réfrigérant (18),
**caractérisé en ce que**
- un canal d'entrée de réfrigérant (5b) est disposé à l'intérieur du carter de turbine (1) entre l'entrée de réfrigérant (5) et l'enveloppe de refroidissement (9),
- à partir du canal d'entrée de réfrigérant (5b) bifurque un canal de dérivation de réfrigérant (5a) qui est relié à l'entrée de réfrigérant (17) du carter de palier,
- un canal de sortie de réfrigérant (16b) est disposé à l'intérieur du carter de turbine (1) entre l'enveloppe de refroidissement (9) et la sortie de réfrigérant (14),
- un canal de recirculation de réfrigérant (16a1) disposé à l'intérieur du carter de turbine est relié à la sortie de réfrigérant (18) du carter de palier et
- le canal de recirculation de réfrigérant (16a1) débouche dans le canal de sortie de réfrigérant (16b), lequel est disposé dans le carter de turbine (1) entre l'enveloppe de refroidissement (9) et la sortie de réfrigérant (14).

2. Turbocompresseur à gaz d'échappement selon la revendication 1, **caractérisé en ce que** l'entrée de réfrigérant (17) du carter de palier (4) est reliée à l'enveloppe de refroidissement (7) du carter de palier par le biais d'un canal d'entrée de réfrigérant (5a2) côté carter de palier.

3. Turbocompresseur à gaz d'échappement selon la revendication 1 ou 2, **caractérisé en ce que** la sortie de réfrigérant (18) du carter de palier (4) est reliée à l'enveloppe de refroidissement (7) du carter de palier (4) par le biais d'un canal de sortie de réfrigérant (16a2) côté carter de palier.

4. Turbocompresseur à gaz d'échappement selon l'une des revendications précédentes, **caractérisé en ce qu'**un joint d'étanchéité (6) est disposé dans la région de l'entrée de réfrigérant (17) du carter de palier (4) entre le carter de palier et le carter de turbine.

5. Turbocompresseur à gaz d'échappement selon l'une des revendications précédentes, **caractérisé en ce qu'**un autre joint d'étanchéité (6) est disposé dans la région de la sortie de réfrigérant (18) du carter de palier (4) entre le carter de palier et le carter de turbine.

6. Turbocompresseur à gaz d'échappement selon la revendication 4 ou 5, **caractérisé en ce que** le joint d'étanchéité est une bague d'étanchéité ou un joint d'étanchéité de type moulure.

7. Turbocompresseur à gaz d'échappement selon l'une des revendications 2 à 6, **caractérisé en ce que** le diamètre (d1) du canal d'entrée de réfrigérant (5a2) côté carter de palier est supérieur au diamètre (d2) du canal de dérivation de réfrigérant (5a1) côté carter de turbine.
